# EUROPÄISCHE PATENTSCHRIFT

(11) **EP 1 191 275 B1**
(45) Veröffentlichungstag und Bekanntmachung des Hinweises auf die Patenterteilung: **30.08.2006**
(21) Anmeldenummer: 01118083.3
(22) Anmeldetag: 26.07.2001
(51) Int. Cl.: F16L 47/00

(54) **Rohrverbindungsstück**
Pipe connection member
Pièce de raccordement de tuyaux

(30) Priorität: 26.09.2000 DE 10048020
(43) Veröffentlichungstag der Anmeldung: 27.03.2002
(73) Patentinhaber: Georg Fischer Rohrleitungssysteme AG, 8201 Schaffhausen (CH)
(72) Erfinder: Bürgi, Josef, 8201 Schaffhausen (CH); Muckenschnabel, Harald, 78224 Singen (DE)
(74) Vertreter: Weiss, Wolfgang

(56) Entgegenhaltungen:
- EP-A- 0 269 792
- DE-U- 7 031 799
- DE-U- 8 523 782
- US-A- 1 722 676
- US-A- 4 013 309

## Beschreibung

Die Erfindung bezieht sich auf ein Rohrverbindungsstück aus Kunststoff, zum Verbinden von mindestens zwei medienführenden Kunststoffrohrleitungen, umfassend mindestens zwei Anschlussbereiche, an die jeweils ein Ende der Kunststoffrohrleitung dichtend anschliessbar ist.

Im Rohrleitungsbau, insbesondere im Anlagenbau und im Apparatebau, werden Rohrleitungen aus Kunststoff eingesetzt für den Transport von aggressiven Medien. Auch im Sanitärbereich und in der Wasseraufbereitung, beispielsweise bei Schwimmbäder oder bei Abwasseranlagen werden Kunststoffrohrleitungen mit unterschiedlichen Leitungsdurchmessern eingesetzt. Diese Rohrleitungen können miteinander verbunden und/oder mehrfach abgezweigt werden. Die Verbindungen müssen oft auf engsten Raum hergestellt werden. Für den Anlagenbauer ist es wichtig, dass die Verbindungen einfach, mit möglichst geringen Kosten und in der kürzest möglichen Installationszeit hergestellt werden.

Aus der DE 7031799 U ist ein T-förmiges Verbindungsteil für Rohrleitungen aus Kunststoff bekannt. Die Anschlussbereiche sind als Einschub- oder Spitzenden ausgebildet und weisen eine konisch abgeschrägt verlaufende Aussenfläche auf um das Aufschieben der Rohrleitungsenden zu erleichtern. Auch die Innenfläche der Anschlussbereiche ist konisch abgeschrägt um das Entformen in der Herstellung des Kunststoffspritzgussteiles zu erleichtern.

Aus der EP 269 792 B1 ist ein Rohrverbindungsstück bekannt. Ein T-förmiges Abzweigverbindungsteil weist, zur Erhöhung der Festigkeit, in den Anschlussbereichen unterschiedliche Wandstärken auf. Die Innenkontur der Anschlussbereiche verläuft exzentrisch zur Aussenkontur, so dass in den Bereichen, in denen die höchste Materialspannungen auftreten, die grösste Wandstärke und die höchste Festigkeit des Materials erreicht wird.

Aus der DE 200 04 312 U1 ist Verbindungsrohr aus Kunststoff bekannt. Im Anschlussbereich eines T-förmigen Abzweigverbindungsteils wird ein gerades Rohrstück eingeschoben über das wiederum ein weiteres Rohrverbindungsteil aufgeschoben wird. Die Verbindungsflächen zwischen dem Rohrstück und den Rohrverbindungsteilen werden mit einem geeigneten Kleber verklebt.

Ausgehend von diesem Stand der Technik ist es Aufgabe der Erfindung, ein Rohrverbindungsstück aus Kunststoff anzugeben, das ohne zusätzlichem Verbindungsteilen für die Herstellung von Mehrfachanschlüsse eingesetzt werden kann, das an der Verbindungsstelle möglichst wenig Raum beansprucht und das auf einfacher Art und Weise in möglichst kurzer Installationszeit mit möglichst wenig Verbindungsstellen pro Anschluss eingebaut werden kann.

Diese Aufgabe wird gelöst durch ein Rohrverbindungsstück aus Kunststoff zum Verbinden von mindestens zwei medienführenden Kunststoffrohrieitungen, umfassend mindestens zwei Anschlussbereiche, an die jeweils ein Ende der Kunststoffrohrleitung dichtend anschliessbar ist, wobei die Anschlussbereiche jeweils mit einer Innenkontur als Muffenabgang und mit einer Aussenkontur als Stutzenabgang ausgebildet sind, gemäß Anspruch 1.

Bevorzugte Weiterbildungen der Erfindung ergeben sich aus den abhängigen Ansprüchen.

Es ist von Vorteil, dass das Rohrverbindungsstück einfach und kostengünstig hergestellt werden kann. Dies wird dadurch erreicht, dass das Rohrverbindungsstück einstückig in einem Kunststoffspritzgussverfahren herstellbar ist. Dies wird auch dadurch erreicht, dass die Innenkontur und die Aussenkontur erfindungsgemäß im Querschnitt kreisförmig ausgebildet sind und dass, gemessen vom Anfang bis zum Ende des Anschlussbereiches, in den Anschlussbereichen der Kreisradius der Innenkontur kontinuierlich abnimmt und der Kreisradius der Aussenkontur kontinuierlich zunimmt. Die kontinuierlich verlaufenden Konturen sind vorteilhaft für den Formenbau in der Kunststoffspritzgussherstellung, da hierdurch die Entformung wesentlich vereinfacht wird.

Es ist auch von Vorteil, dass das Rohrverbindungsstück auf möglichst engem Raum und ohne Verwendung von Zwischenstücken für Mehrfachanschlüsse eingesetzt werden kann. Dies wird dadurch erreicht, dass die Anschlussbereiche erfindungsgemäß jeweils mit einer Innenkontur als Muffenabgang und mit einer Aussenkontur als Stutzenabgang ausgebildet sind. Wenn das Rohrverbindungsstück als Reduktionsstück von einem grösseren auf einem kleineren Rohrdurchmesser ausgebildet ist, können an beiden Enden des Rohrverbindungsstücks entweder der Stutzenabgang oder der Muffenabgang zur Verbindung mit der Kunststoffrohrleitung verwendet werden. Durch diese vielseitige Anwendbarkeit wird die Anzahl der unterschiedlichen Artikel, die an Lager gehalten werden müssen, reduziert.

Es ist weiter von Vorteil, dass mit dem erfindungsgemässen Rohrverbindungsstück die Handhabung für den Installateur auf der Baustelle erheblich vereinfacht wird. Dies wird dadurch erreicht, dass der Muffenabgang erfindungsgemäß am Ende des Anschlussbereiches mit einem ringförmigen Absatz derart ausgebildet ist, dass das Ende der Kunststoffrohrleitung mit einer normierten Einstecktiefe in den Muffenabgang einsteckbar ist und dass der Stutzenabgang am Ende des Anschlussbereiches mit einer ringförmigen Erhebung derart ausgebildet ist, dass das Ende der Kunststoffrohrleitung mit einer normierten Aufstecktiefe auf den Stutzenabgang aufsteckbar ist. Die Erhebung auf der Aussenseite dient auch als Markierung für die Kleblänge, das heisst die Länge am Ende eines Rohrleitungsteils, die mit Klebstoff beschichtet werden muss vor dem endgültigen Verbinden der Rohrleitung mit dem Rohrverbindungsstück. Verwechslungen werden ausgeschlossen, weil an der Aussenseite des Rohrverbindungsstüks erfindungsgemäß eine weitere Erhebung in der Form einer Zahlenreihe als Kennzeichnung für die normierten Durchmesserangaben der jeweiligen Muffenabgänge und Stutzenabgänge ausgebildet ist. Wenn das Rohrverbindungsstück als eine T-förmige Abzweigung ausgebildet ist, wird der Winkel zwischen der Hauptleitung und der abzweigenden Leitung einfach ablesbar und einstellbar, weil am Anfang und am Ende des Anschlussbereiches an der Aussenseite des Rohrverbindungsstückes jeweils parallel zur Rohrleitungsachse verlaufende Erhebungen als Winkelmarkierungen ausgebildet sind. Die Winkelmarkierungen sind in regelmässigen Abständen von beispielsweise 45° am Umfang des jeweiligen Anschlussbereiches angeordnet.

Ein Ausführungsbeispiel der Erfindung wird anhand der Figuren beschrieben. Es zeigen:
Figur 1 eine perspektivische Sicht auf ein erfindungsgemässes Rohrverbindungsstück in einem ersten Ausführungsbeispiel,
Figur 2 eine seitliche Sicht auf das Rohrverbindungsstück von Figur 1,
Figur 3 einen Schnitt durch das Rohrverbindungsstück von Figur 1,
Figur 4 eine perspektivische Sicht auf ein erfindungsgemässes Rohrverbindungsstück in einem zweiten Ausführungsbeispiel,
Figur 5 eine seitliche Sicht auf das Rohrverbindungsstück von Figur 4,
Figur 6 einen Schnitt durch das Rohrverbindungsstück von Figur 4,
Figur 7 einen Schnitt durch eine Anordnung von zwei Rohrverbindungsstücken gemäss Figur 1 vor der Verbindung mit den Kunststoffrohrleitungen und
Figur 8 einen Schnitt durch eine Anordnung von zwei Rohrverbindungsstücken gemäss Figur 1 nach der Verbindung mit den Kunststoffrohrleitungen.

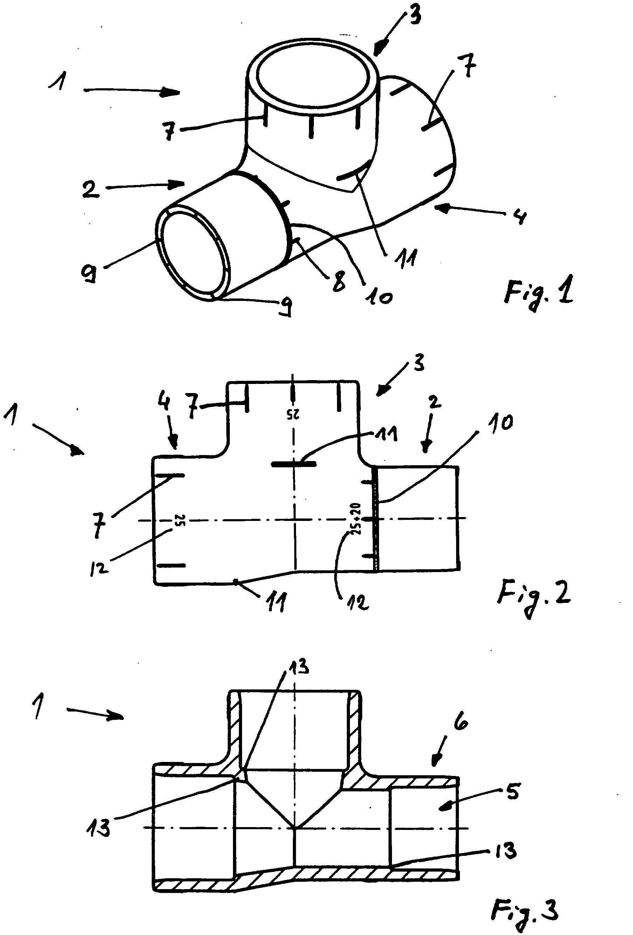

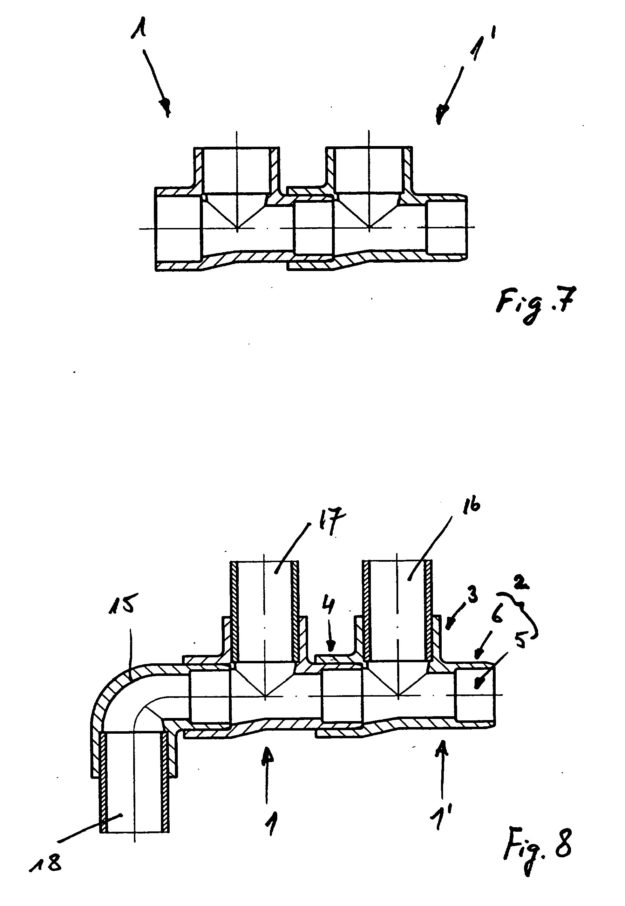

In Figur 1 ist ein Rohrverbindungsstück in einem ersten Ausführungsbeispiel perspektivisch dargestellt. Figur 1 zeigt ein T-förmiges Abzweigverbindungsstück 1 mit drei Anschlussbereichen 2,3,4. Jeder Anschlussbereich 2,3,4 ist sowohl als einen Muffenabgang 5 wie auch als einen Stutzenabgang 6 ausgebildet. Der erste, vordere Anschlussbereich 2 weist einen kleineren Durchmesser auf als die weiteren Anschlussbereiche 3,4. An den weiteren Anschlussbereichen 3,4 können Rohrleitungen angeschlossen werden, die um mindestens eine Dimension in der Normreihe für die Normierung von Rohrdurchmessern grösser ist als die Dimension des ersten Anschlussbereiches 2. In den Anschlussbereichen 2,3,4 sind Winkelmarkierungen 7,8 dargestellt. An den Anfängen der Anschlussbereiche 3,4, sind Erhebungen 7 ausgebildet, die parallel zur Achse der zu verbindenden Kunststoffrohrleitungen (die erst in Figur 8 dargestellt sind) verlaufen. Am Ende des ersten Anschlussbereiches 2 sind weitere Erhebungen 8 als Winkelmarkierungen auf der Aussenseite des Rohrverbindungsstück 1 dargestellt. Auf der Stirnfläche des ersten Anschlussbereiches 2, sind weitere Winkelmarkierungen 9 dargestellt. Die Winkelmarkierungen 7,8,9 sind in regelmässigen Abständen von beispielsweise 45° am Umfang des jeweiligen Anschlussbereiches angeordnet. In jedem Anschlussbereich 2,3,4 sind die Winkelmarkierungen 7,8,9 derart angeordnet, dass mindestens zwei der Winkelmarkierungen 7,8,9 aus jedem Anschlussbereich 2,3,4 fluchtend zueinander verlaufen. Hierdurch wird erreicht dass die anzuschliessenden Rohrleitungen genau fluchtend ausgerichtet werden können. Dies ist besonders vorteilhaft, wenn in der anzuschliessenden Rohrleitung bereits Armaturen eingebaut sind oder wenn die abgehende Rohrleitung abgewinkelt unter einem Winkel von beispielsweise 45° zur Hauptleitung verläuft.

In Figur 2 ist das T-förmige Abzweigverbindungsstück 1 von Figur 1 nochmals in einer seitlichen Ansicht dargestellt. In Figur 1 und 2 sind auch Erhebungen 10,11 auf der Aussenseite des Rohrverbindungsstück 1 ersichtlich, die ringförmig 10 oder teilringförmig 11 ausgebildet sind. Diese ringförmige oder teilringförmige Erhebungen 10,11 erfüllen zwei Aufgaben. Erstens bezeichnet der Abstand zwischen dem Anfang des Anschlussbereiches und der Erhebungen am Ende des Anschlussbereiches die sogenannte Kleblänge, das heisst die Länge die am anzuschliessenden Rohr mit Klebstoff beschichtet werden muss. Zweitens dient die ringförmig angeordnete Markierung 10 zumindest als eine optische Begrenzung der Aufstecktiefe beim Aufstecken einer Kunststoffrohrleitung auf den Stutzenabgang 6 . In Figur 2 sind weiterhin Erhebungen 12 als Zahlen dargestellt. Die Zahlen 12 beziehen sich auf die Dimensionen der Normreihe für Rohrleitungsnormdurchmesser. Hiermit kann jederzeit deutlich abgelesen werden, welche Rohrleitungen an den jeweiligen Anschlussbereichen angeschlossen werden können. Sämtliche Erhebungen werden im Herstellungsverfahren des Rohrverbindungsstück 1, das in einem Spritzgusswerkzeug hergestellt wird, ausgebildet. Hiermit wird erreicht dass die Markierungen dauerhaft sind und nicht mehr, wie das bei einem Farbaufdruck der Fall wäre, ausgewischt werden können.

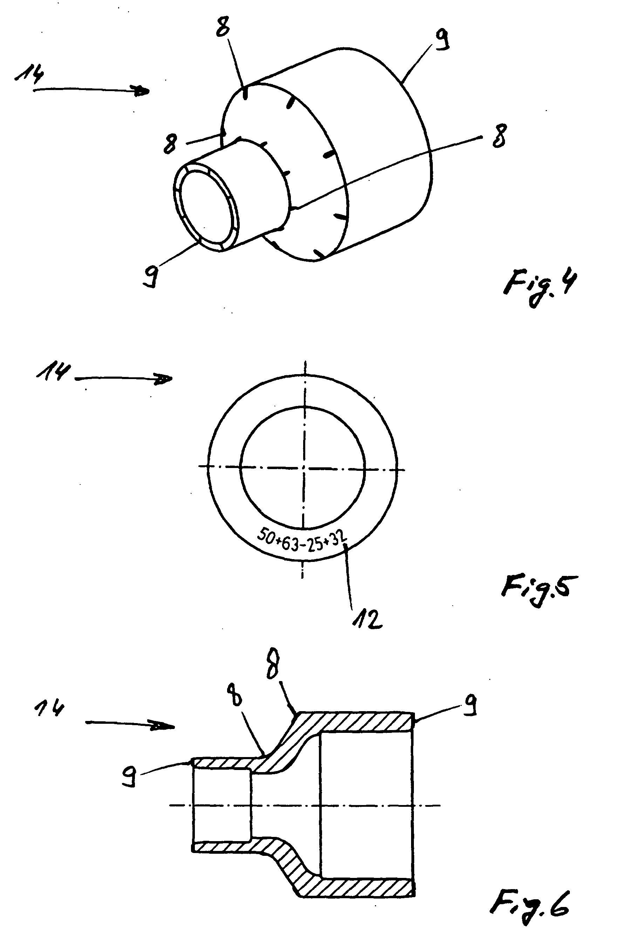

In Figur 3 ist das Rohrverbindungsstück von Figur 1 geschnitten entlang der Mittellinie dargestellt. In Figur 3 ist ersichtlich, wie sämtliche Anschlussbereiche 2,3,4 als Muffenabgänge 5 ausgebildet sind. Die Aussenkonturen und die Innenkonturen verlaufen kontinuierlich vom Anfang zum Ende des jeweiligen Anschlussbereiches. Beim Muffenabgang 5 ist der Kreisradius am Anfang grösser als am Ende des Anschlussbereiches. Bei dem Stutzenabgang 6 ist der Kreisradius am Anfang kleiner als am Ende des Anschlussbereiches. Die Ausbildung mit einer sich kontinuierlich verändernden Kontur ist vorteilhaft für die Herstellung im Spritzgusswerkzeug, weil der Entformvorgang vereinfacht wird. Auch das Einführen einer handelsüblichen, gerade gezogenen Kunststoffrohrleitung kann leichter eingesteckt oder aufgesteckt werden, wenn die Konturen einen Verlauf des Kreisradius aufweisen. In Figur 3 sind am Ende der Anschlussbereiche 2,3,4, die als Muffenabgänge ausgebildet sind, ringförmige Absätze 13 auf der Innenfläche des jeweiligen Anschlussbereiches dargestellt.

In den Figuren 4 bis 6 ist ein zweites Ausführungsbeispiel des erfindungsgemässen Rohrverbindungsstück dargestellt. Hier ist eine Reduktion 14 als Verbindungsstück für zwei Rohrleitungen mit unterschiedlichem Durchmesser dargestellt. In Figur 4 ist ersichtlich, wie die Winkelmarkierungen 8 am Ende der Anschlussbereiche auf die konisch verlaufende Aussenfläche zwischen den Anschlussbereichen angeordnet sind. Auch die weiteren Winkelmarkierungen 9 auf die Stirnfläch des Anschlussbereiches sind ersichtlich. In Figur 5 ist dargestellt, wie mit einer Zahlenreihe angegeben wird, welche Rohrdimensionen an die Reduktion angeschlossen werden können. Die grösste Zahl, z.B. 63, bezieht sich auf den grösseren Stutzenabgang und die kleinste Zahl, z.B. 25, bezieht sich auf den kleineren Muffenabgang der Reduktion 14.

In Figur 7 ist dargestellt, wie durch Verbindung eines ersten Rohrverbindungsstückes 1 mit einem weiteren identischen Rohrverbindungsstück 1' Mehrfachanschlüsse hergestellt werden können. Hierbei fällt auf, dass kein weiteres Rohrverbindungsmaterial, wie beispielsweise ein gerades Rohrteil, verwendet werden muss.

In Figur 8 ist die Anordnung von Figur 7 nochmals dargestellt, hier jedoch mit den abgehenden Rohrleitungen 16,17,18 und mit einem Bogen 15, die in den jeweiligen Anschlussbereichen durch ein Klebeverfahren unlösbar und mediumsdicht verbunden wurden.

## Patentansprüche

1. Rohrverbindungsstück (1,14) aus Kunststoff, zum Verbinden von mindestens zwei medienführenden Kunststoffrohrleitungen, umfassend mindestens zwei Anschlussbereiche (2,3,4), an die jeweils ein Ende der Kunststoffrohrleitung dichtend anschliessbar ist, wobei die Anschlussbereiche (2,3,4) jeweils mit einer Innenkontur als Muffenabgang (5) und mit einer Aussenkontur als Stutzenabgang (6) ausgebildet sind,
wobei die Innenkontur und die Aussenkontur im Querschnitt kreisförmig ausgebildet sind und wobei, gemessen vom Anfang bis zum Ende des Anschlussbereiches (2,3,4), in den Anschlussbereichen der Kreisradius der Innenkontur kontinuierlich abnimmt und der Kreisradius der Aussenkontur kontinuierlich zunimmt, **dadurch gekennzeichnet,**
**dass** zumindest ein erster Anschlussbereich (2) mit Kreisradien der Innenkontur und der Aussenkontur vorgesehen ist, der von den weiteren Kreisradien der weiteren Anschlussbereiche (3,4) um mindestens einer Normdimension einer normierten Durchmesserreihe abweicht,
**dass** der Muffenabgang (5) am Ende des Anschlussbereiches (2,3,4) mit einem ringförmigen Absatz (13) derart ausgebildet ist, dass das Ende einer Kunststoffrohrleitung mit einer normierten Einstecktiefe in den Muffenabgang (5) einsteckbar ist,
**dass** der Stutzenabgang (6) am Ende des Anschlussbereiches mit einer ringförmigen Erhebung (10) oder einer teilring förmigen Erhebung (11) derart ausgebildet ist, dass das Ende einer Kunststoffrohrleitung mit einer normierten Aufstecktiefe auf den Stutzenabgang (6) aufsteckbar ist
und **dass** an der Aussenseite des Rohrverbindungsstücks (1, 14) eine weitere Erhebung (12) in der Form einer Zahlenreihe als Kennzeichnung für die normierten Durchmesserangaben der jeweiligen Muffenabgänge (5) und Stutzenabgänge (6) ausgebildet ist.

2. Rohrverbindungsstück nach dem Anspruch 1, **dadurch gekennzeichnet, dass** in den Anschlussbereichen (2,3,4) die jeweilige Aussenkontur mindestens eine Normdimension einer normierten Durchmesserreihe grösser ist als die jeweilige Innenkontur.

3. Rohrverbindungsstück nach einem der Ansprüche 1 oder 2, **dadurch gekennzeichnet, dass** am Anfang und am Ende des Anschlussbereiches (2,3,4) an der Aussenseite des Rohrverbindungsstückes jeweils parallel zur Rohrleitungsachse verlaufende Erhebungen (7,8) als Winkelmarkierungen ausgebildet sind.

4. Rohrverbindungsstück nach einem der Ansprüche 1 bis 3, **dadurch gekennzeichnet, dass** die Winkelmarkierungen (7,8) in regelmässigen Abständen von 45° am Umfang des jeweiligen Anschlussbereiches (2,3,4) angeordnet sind.

5. Rohrverbindungsstück nach einem der Ansprüche 1 bis 4, **dadurch gekennzeichnet, dass** weitere Winkelmarkierungen (9) in regelmässigen Abständen auf die Stirnfläche des Stutzenabganges (6) angeordnet sind.

6. Rohrverbindungsstück nach einem der Ansprüche 1 bis 5, **dadurch gekennzeichnet, dass** das Rohrverbindungsstück (1,14) einstückig in einem Kunststoffspritzgussverfahren herstellbar ist.

7. Rohrverbindungsstück nach einem der Ansprüche 1 bis 6, **dadurch gekennzeichnet, dass** die Verbindung zwischen dem Rohrverbindungsstück (1,14) und den Kunststoffrohrleitungen (16,17,18) durch ein Klebeverfahren, ein Schweissverfahren, insbesondere ein Elektroschweissverfahren, oder durch eine Klemmung herstellbar ist.

## Claims

1. Pipe connection piece (1; 14) made of plastic for connecting at least two media-carrying plastic pipelines, comprising at least two connecting regions (2, 3, 4) to each of which one end of the plastic pipeline can be connected in a sealed manner, the connecting regions (2, 3, 4) each having an inner contour formed as a socket branch (5) and an outer contour formed as a spigot branch (6), the inner contour and the outer contour being circular in cross section and, measured from the start to the end of the connecting region (2, 3, 4), the circle radius of the inner contour continuously decreasing and the circle radius of the outer contour continuously increasing in the connecting regions, **characterized in that** at least a first connecting region (2) having circle radii for the inner contour and the outer contour is provided which deviates from the further circle radii of the further connecting regions (3, 4) by at least a standard dimension of a standardized series of diameters, **in that** the socket branch (5) is designed to have an annular shoulder (13) at the end of the connecting region (2, 3, 4) such that the end of a plastic pipeline can be plugged into the socket branch (5) to a standardized plug-in depth, **in that** the spigot branch (6) is designed to have an annular elevation (10) or a partially annular elevation (11) at the end of the connecting region such that the end of a plastic pipeline can be plugged onto the spigot branch (6) to a standardized plug-on depth, and **in that** there is formed on the outside of the pipe connection piece (1, 14) a further elevation (12) in the form of a series of numbers as an identification of the standardized diameter details for the respective socket branches (5) and spigot branches (6).

2. Pipe connection piece according to Claim 1, **characterized in that** in the connecting regions (2, 3, 4) the respective outer contour is at least a standard dimension of a standardized series of diameters larger than the respective inner contour.

3. Pipe connection piece according to either of Claims 1 and 2, **characterized in that** elevations (7, 8) which each extend parallel to the pipeline axis are formed as angle markings on the outside of the pipe connection piece at the beginning and at the end of the connecting region (2, 3, 4).

4. Pipe connection piece according to one of Claims 1 to 3, **characterized in that** the angle markings (7, 8) are arranged at regular intervals of 45° on the circumference of the respective connecting region (2, 3, 4).

5. Pipe connection piece according to one of Claims 1 to 4, **characterized in that** further angle markings (9) are arranged at regular intervals on the end face of the spigot branch (6).

6. Pipe connection piece according to one of Claims 1 to 5, **characterized in that** the pipe connection piece (1, 14) can be produced in one piece in a plastic injection-moulding process.

7. Pipe connection piece according to one of Claims 1 to 6, **characterized in that** the connection between the pipe connection piece (1, 14) and the plastic pipelines (16, 17, 18) can be produced by an adhesive bonding process, a welding process, in particular an electric welding process, or by a clamping operation.

## Revendications

1. Raccord de tuyau (1, 14) en matière plastique, pour la connexion d'au moins deux canalisations en matière plastique conductrices de fluide, comprenant au moins deux zones de raccordement (2, 3, 4) auxquelles peut être raccordée hermétiquement respectivement une extrémité de la canalisation en matière plastique, les zones de raccordement (2, 3, 4) étant réalisées respectivement avec un contour intérieur en forme de prise à manchon (5) et avec un contour extérieur en forme de prise à tubulure (6),
dans lequel le contour intérieur et le contour extérieur sont réalisés en forme circulaire dans leur section transversale et, mesuré du début à la fin de la zone de raccordement (2, 3, 4), dans les zones de raccordement, le rayon de courbure du contour intérieur diminue en continu et le rayon de courbure du contour extérieur augmente en continu, **caractérisé en ce que**
il est prévu au moins une première zone de raccordement (2) aux rayons de courbure du contour intérieur et du contour extérieur qui diverge des autres rayons de courbure des autres zones de raccordement (3, 4) à raison d'au moins une dimension normalisée d'une série normalisée de diamètres,
que la prise à manchon (5) est réalisée à l'extrémité de la zone de raccordement (2, 3, 4) avec un talon de forme annulaire (13) de manière à ce que l'extrémité d'une canalisation en matière plastique puisse être fichée à une profondeur normalisée de fichage dans la prise à manchon (5),
la prise à tubulure (6) est réalisée, à l'extrémité de la zone de raccordement, avec une proéminence de forme annulaire (10) ou avec une proéminence de forme circulaire (11) de manière à ce que l'extrémité d'une canalisation en matière plastique puisse être fichée à une profondeur normalisée de fichage sur la prise à tubulure (6) et,
que, sur le côté extérieur du raccord de tuyau (1, 14), une autre proéminence (12) sous forme d'une rangée de chiffres servant de marquage pour les indications normalisées de diamètre des prises à manchon (5) et prises à tubulure respectives (6) est réalisée.

2. Raccord de tuyau selon la revendication 1, **caractérisé en ce que**, dans les zones de raccordement (2, 3, 4), le contour extérieur respectif est plus grand d'au moins une dimension normalisée d'une série normalisée de diamètres que le contour intérieur respectif.

3. Raccord de tuyau selon l'une quelconque des revendications 1 ou 2, **caractérisé en ce qu'**au début et à la fin de la zone de raccordement (2, 3, 4), des proéminences (7, 8) servant de marquage d'angle sont réalisées sur le côté extérieur du raccord de tuyau respectivement parallèlement à l'axe de la canalisation.

4. Raccord de tuyau selon l'une quelconque des revendications 1 à 3, **caractérisé en ce que** les marquages d'angle (7, 8) sont disposés à des distances régulières de 45° sur la circonférence de la zone de raccordement respective (2, 3, 4).

5. Raccord de tuyau selon l'une quelconque des revendications 1 à 4, **caractérisé en ce que** d'autres marquages d'angle (9) sont disposés à des distances régulières sur la surface frontale de la prise à tubulure (6).

6. Raccord de tuyau selon l'une quelconque des revendications 1 à 5, **caractérisé en ce que** le raccord de tuyau (1, 14) peut être fabriqué d'une seule pièce par un procédé de moulage par injection de matière plastique.

7. Raccord de tuyau selon l'une quelconque des revendications 1 à 6, **caractérisé en ce que** la connexion entre le raccord de tuyau (1, 14) et les canalisations en matière plastique (16, 17, 18) peut être établie par un procédé de collage, un procédé de soudure, notamment un procédé de soudure électrique, ou par blocage.
